# EUROPÄISCHE PATENTSCHRIFT

(11) **EP 1 309 486 B1**
(45) Veröffentlichungstag und Bekanntmachung des Hinweises auf die Patenterteilung: **30.03.2005**
(21) Anmeldenummer: 01960605.2
(22) Anmeldetag: 01.08.2001
(51) Int. Cl.: B65B 9/06, B65B 1/38, B65B 25/06, A01J 21/02

(54) **MASCHINE ZUM HERSTELLEN UND VERPACKEN VON FORMLINGEN AUS FORMBARER MASSE**
MACHINE FOR THE PRODUCTION AND PACKAGING OF MOULDED BODIES FROM A MOULDABLE MASS
MACHINE POUR PRODUIRE ET EMBALLER DES PIECES MOULEES A PARTIR D'UNE MATIERE A MOULER

(30) Priorität: 16.08.2000 DE 10039975
(43) Veröffentlichungstag der Anmeldung: 14.05.2003
(73) Patentinhaber: Hosokawa Bepex GmbH, 74211 Leingarten (DE)
(72) Erfinder: ALTVATER, Frank, 74074 Heilbronn (DE); FRANK, Kurt, 74912 Kirchardt (DE)
(74) Vertreter: Goetz, Rupert, Dipl.-Ing.
(86) Internationale Anmeldenummer: PCT/EP2001/008901
(87) Internationale Veröffentlichungsnummer: WO 2002/014152

(56) Entgegenhaltungen:
- DE-C- 834 364
- FR-A- 1 208 465
- US-A- 1 524 915
- US-A- 2 010 523
- US-A- 3 578 217
- US-A- 4 102 111

## Beschreibung

Die Erfindung betrifft eine Maschine nach dem Oberbegriff des Anspruchs 1.

Eine Maschine dieser Gattung ist aus FR-A-1 208 465 bekannt. Sie ist zum Portionieren von Butter und anderen zu annähernd quaderförmigen Formlingen formbaren Massen und zum unmittelbar anschließenden Verpacken der Formlinge vorgesehen. Bei dieser Maschine sind die am Ausformrad vorgesehenen Formen radial nach innen durch die zylindrische Mantelfläche des Ausformrades begrenzt und voneinander durch Schieber getrennt, die in je einem radialen Schlitz des Ausformrades geführt und zentral gesteuert in radialer Richtung bewegbar sind. Die Schieber nehmen eine radial äußere Stellung ein, während sie den Füllbereich durchlaufen. Dabei schieben sie jeweils einen Teil der im Füllbereich bereitgehaltenen, zu verpackenden Masse vor sich her. Jeder den Verweilbereich erreichende Schieber legt sich mit seiner radial äußeren Kante an einen zum Ausformrad konzentrischen Abschnitt einer Gehäusewand an und bildet zusammen mit dem vorangehenden Schieber eine geschlossene Form, die mit der auf diese Weise portionierten, zu verpackenden Masse gefüllt ist. Die schließlich im Absetzbereich auf dem Packmaterial abgesetzten Formlinge sind von unveränderbarem Grundriss und unveränderbarer Höhe.

Aus US-A-1,524,915 ist eine Maschine zum Herstellen von Blöcken oder Ziegeln aus plastischer Masse bekannt, bei der oberhalb einer Ladestrecke, z.B. eines Förderers, ein Ausformrad um eine waagerechte, quer zur Ladestrecke angeordnete Achse drehantreibbar angeordnet ist. Das Ausformrad weist radial angeordnete Formen auf, die je einen Kolben enthalten und bei radial zurückgezogenem Kolben in einem Füllbereich gefüllt werden und anschließend einen Verdichtungsbereich durchlaufen, in dem die Masse von einem Verdichtungsschuh verdichtet wird. Schließlich durchlaufen die Formen einen Absetzbereich, in dem ihr Kolben, von einer ortsfesten zentralen Steuerkurve gesteuert, radial nach außen verschoben wird und den in der Form entstandenen Block oder Ziegel ausstößt, so dass er auf der Ladestrecke abgesetzt wird. Ein Zuführen von Packmaterial auf der Ladestrecke zum Verpacken der Blöcke oder Ziegel ist nicht vorgesehen. Entsprechendes gilt auch für ähnliche, aus WO 00/30458 bekannte Maschinen zum Formen dreidimensionaler Erzeugnisse aus Nahrungsmitteln, insbesondere Fleisch, sowie für die aus US-A- 3,578,217 bekannte Maschine.

Eine Maschine zum Verpacken vorgeformter Artikel und zum Versiegeln der aus streifenförmigem, thermoplastischem Folienmaterial gebildeten Verpackung ist aus US-A-4,102,111 bekannt. Die Mascine hat ein Heißsiegelgerät mit quer angeordneten Klemmbacken, von denen das Folienmaterial zwischen aufeinanderfolgenden Artikeln eingeklemmt, verschweißt und anschließend durchtrennt wird.

Der Erfindung liegt die Aufgabe zugrunde, bei einer Maschine der eingangs genannten Gattung Umrüstzeiten zu verkürzen, wenn nacheinander Formlinge unterschiedlicher Gestalt hergestellt und verpackt werden sollen.

Die Aufgabe ist erfindungsgemäß ausgehend von einer Maschine der genannten Gattung mit den kennzeichnenden Merkmalen des Anspruchs 1 gelöst.

Bei der erfindungsgemäßen Maschine ist der Abstand zwischen der zentralen Achse des Ausformrades und der Ladestrecke zur Anpassung an Formlinge unterschiedlicher Höhe einstellbar. Dadurch wird die Möglichkeit geschaffen, zwischen der Ladestrecke und dem ihr jeweils nächstliegenden Bereich der Umfangsfläche des Ausformrades einen Zwischenraum einzustellen, dessen Höhe nur wenig größer ist als diejenige der Formlinge. Dies trägt dazu bei, auch bei hohen Arbeitsgeschwindigkeiten ein präzises Absetzen der Formlinge auf dem streifenförmigen Packmaterial zu gewährleisten.

Bei der nach dem Anspruch 2 weitergebildeten erfindungsgemäßen Maschine sind die Formen innerhalb je einer Buchse angeordnet, die im Ausformrad so befestigt ist, dass sie zusammen mit dem zugehörigen Kolben auswechselbar ist. Auch dadurch lässt sich die erfindungsgemäße Maschine innerhalb kurzer Umrüstzeiten auf Formlinge unterschiedlicher Gestalt umstellen.

Die Kolben sind vorzugsweise über je ein mit ihnen verbundenes Kurvenfolgeglied von einer zentralen Steuerkurve gesteuert, wie das aus der erwähnten US-A-1,524,915 ansich bekannt ist. Diese Steuerkurve nimmt an der Drehung des Ausformrades nicht teil und kann bei der erfindungsgemäßen Maschine so gestaltet sein, dass sie nur für eine genau definierte radial nach außen gerichtete Verschiebung der Kolben in den Formen auf dem Weg vom Füllbereich zum Absetzbereich unmittelbar verantwortlich ist; die auf dem Weg vom Absetzbereich zum Füllbereich erforderliche Rückverschiebung der Kolben kann durch Federkraft bewirkt werden. Die zentrale Steuerkurve kann aber auch so gestaltet sein, dass sie die radial nach innen gerichtete Rückverschiebung der Kolben ebenfalls zwangsweise steuert, wie dies gemäß US-A-1,524,915 vorgesehen ist.

Zum Verarbeiten von Massen, die einer Verdichtung bedürfen, ist es vorteilhaft, wenn die Formen entlang mindestens eines Teils des Verweilbereichs mittels eines Presskörpers verschließbar sind, der an die zylindrische Mantelfläche des Ausformrades anpreßbar ist. Auch dies ist aus US-A-1,524,915 bekannt. In diesem Fall kann die Steuerkurve bei der erfindungsgemäßen Maschine so gestaltet sein, dass sie die Kolben in ihren Formen auf deren Weg vom Füllbereich zum Absetzbereich so weit radial nach außen verschiebt, bis die entstehenden Formlinge eine vorbestimmte Dichte erreicht haben. Unabhängig davon können die entstehenden Formlinge bei der erfindungsgemäßen Maschine im Verweilbereich thermisch behandelt werden, indem die Formen erhitzt oder gekühlt werden.

Wenn es darum geht, Formlinge aus klebriger Masse herzustellen, ist gemäß einer Weiterbildung der Erfindung vorgesehen, dass im Absetzbereich zum Trennen der Formlinge von den Kolben ein Abstreifer aus Stahldraht angeordnet ist, der sich längs einer Mantellinie des Ausformrades erstreckt und an dessen zylindrischer Mantelfläche mit einer ausreichenden Kraft anliegend gehalten ist, um diese Mantelfläche sauberzuhalten.

In diesem Zusammenhang ist es ferner vorteilhaft, wenn die Kolben eine entsprechend der zylindrischen Mantelfläche des Ausformrades gekrümmte Stirnfläche mit einer in Drehrichtung des Ausformrades vorwärts weisenden Anlaufschräge für den Abstreifer aufweisen.

Ein Ausführungsbeispiel mit weiteren Einzelheiten der Erfindung wird im folgenden an Hand schematischer Zeichnungen beschrieben; darin ist:
- Fig. 1: eine Seitenansicht einer erfindungsgemäßen Maschine als Ganzes,

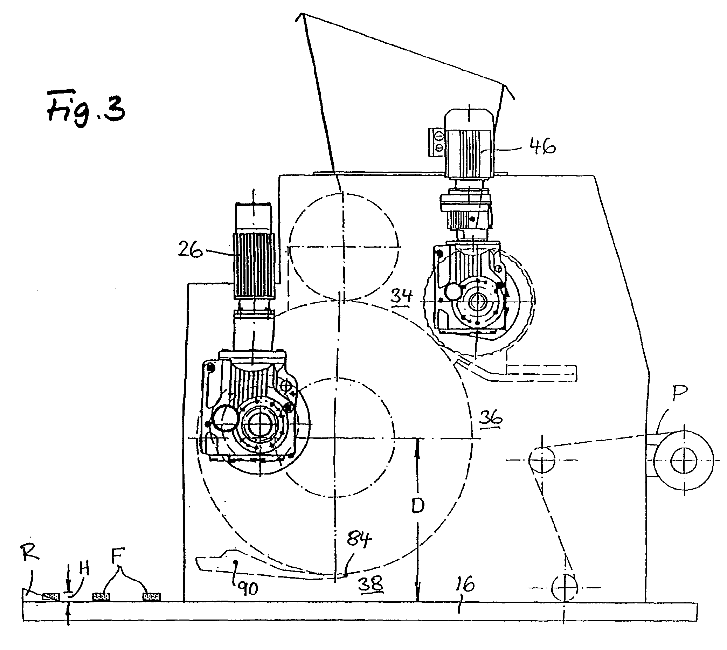

- Fig. 2: die zugehörige Draufsicht,
- Fig. 3: die entgegengesetzte Seitenansicht des in Fig. 1 links angeordneten Teils der Maschine, in größerem Maßstab gezeichnet,

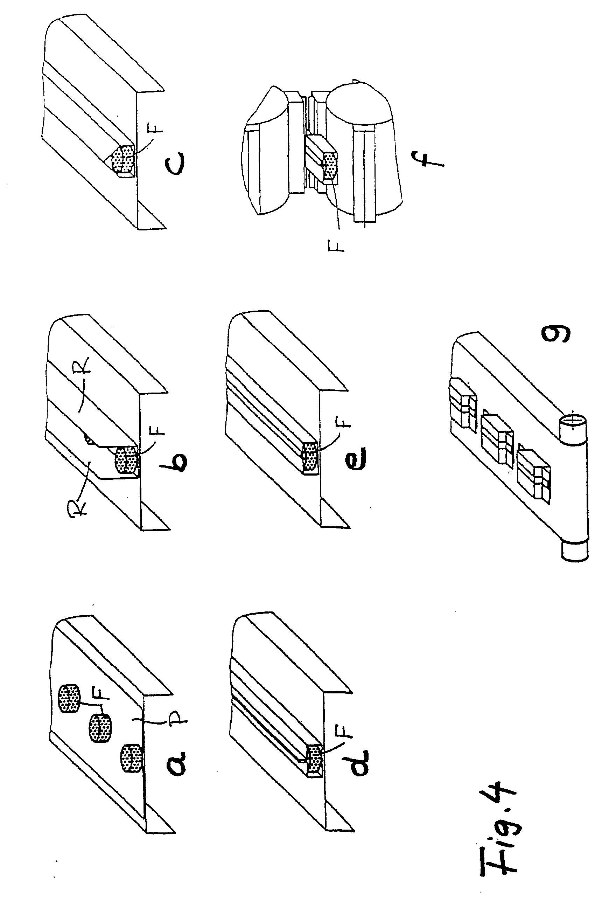

- Fig. 4: mehrere aufeinanderfolgende, mit a bis g bezeichnete Stadien des Verpackens von Formlingen,
- Fig. 5: ein stark vergrößerter Ausschnitt im Bereich V der Fig. 1,
- Fig. 6: ein ebenso stark vergrößerter Ausschnitt im Bereich VI der Fig. 1,
- Fig. 7: eine genauere Darstellung des Bereichs VII in Fig. 6,
- Fig. 8: die Ansicht in Richtung des Pfeils VIII in Fig. 7, teilweise als Schnitt dargestellt, und
- Fig. 9: die Ansicht in Richtung des Pfeils IX in Fig. 7.

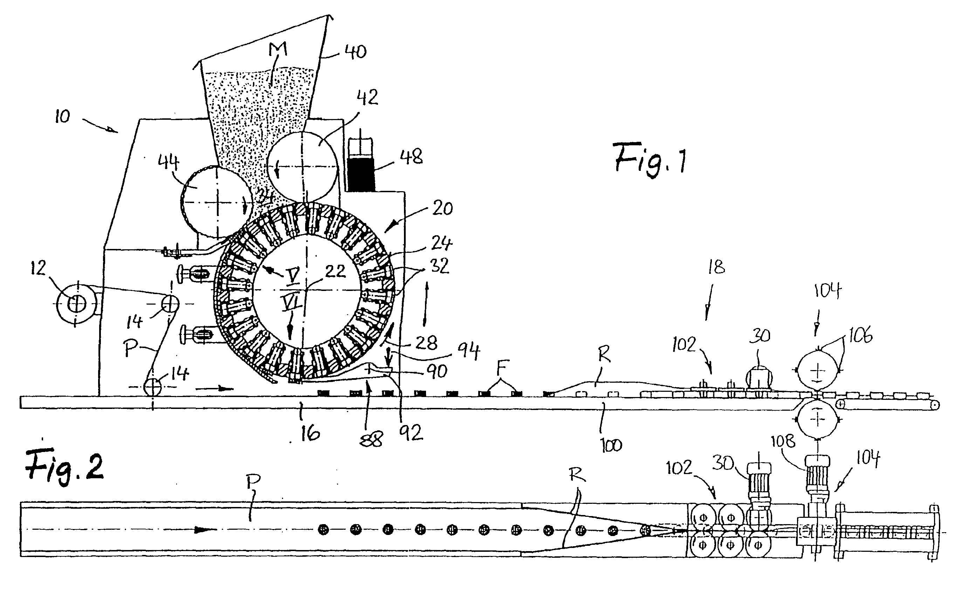

Die dargestellte Maschine hat einen kastenförmigen Ständer 10, der in Fig. 1 ohne seine dem Betrachter zugewandte Seitenwand dargestellt ist, um Einzelheiten sichtbar zu machen. An den Ständer 10 ist ein Materialspender 12 in Form einer Haspel für aufgerolltes streifenförmiges Packmaterial P außen angebaut, Das streifenförmige Packmaterial P erstreckt sich vom Materialspender 12 aus in den Ständer 10 hinein, läuft über in diesem gelagerte Umlenkrollen 14 und weiter über eine gerade, waagerechte Ladestrecke 16, die im dargestellten Beispiel von einer langgestreckten Platte gebildet ist, deren Oberfläche mit dem Packmaterial P eine reibungsarme Paarung bildet. Auf die Ladestrecke 16 folgt eine Einrichtung 18 zum Umschließen von Formlingen F, die auf der dargestellten Maschine aus einer Masse M hergestellt werden.

Im kastenförmigen Ständer 10 ist ein kreiszylindrisches Ausformrad 20 um eine zentrale Achse 22 drehbar gelagert, die in einem Abstand D oberhalb der Ladestrecke 16 quer zu dieser, also rechtwinklig zur Längsrichtung des sich über die Ladestrecke 16 bewegenden streifenförmigen Packmaterials P angeordnet ist. Das Ausformrad 20 hat eine zylindrische Mantelfläche 24, deren unterste Mantellinie in einer Entfernung E über der Ladestrecke 16 angeordnet ist, die nur wenig größer ist als die Höhe H jedes einzelnen Formlings F.

An den Ständer 10 ist ein regelbarer, beispielsweise als elektrischer Servomotor ausgeführter, Antrieb 26 angebaut, der das Ausformrad 20 mit einer wählbaren konstanten Umfangsgeschwindigkeit 28, wahlweise auch intermittierend, um die zentrale Achse 22 drehen läßt. Dieser Antrieb 26 ist synchronisierbar mit einem Antrieb 30 der Einrichtung 18 zum Umschließen der Formlinge F.

Das Ausformrad 20 enthält in gleichmäßigen Winkelabständen rings um die zentrale Achse 22 radial angeordnete zylindrische Formen 32, die im dargestellten Beispiel kreiszylindrisch sind, aber grundsätzlich jede beliebige, an die angestrebte Gestalt der Formlinge F angepaßte Querschnittsform haben können. Die Formen 32 durchlaufen bei sich drehendem Ausformrad 20 nacheinander einen Füllbereich 34, einen Verweilbereich 36 und einen Absetzbereich 38 und kehren schließlich zum Füllbereich 34 zurück.

Der Füllbereich 34 ist am unteren Ende eines in den kastenförmigen Ständer 10 hineinragenden Trichters 40 ausgebildet und von zwei zum Ausformrad 20 achsparallelen Walzen 42 und 44 vorne und hinten, bezogen auf die Drehrichtung des Ausformrades 20, begrenzt. Die Walze 42 hat eine glatte Mantelfläche und ist so angeordnet, daß diese an der zylindrischen Mantelfläche 24 des Ausformrades 20 ungefähr entlang deren oberster Mantellinie gleitend anliegt oder ihr mit einem äußerst geringen Abstand gegenüberliegt. Die Walze 44 hat eine parallel zu ihrer Achse geriffelte Oberfläche und ist, bezogen auf die Drehrichtung des Ausformrades 20, hinter der glatten Walze 42, weiter unten, derart angeordnet, daß sie sich auf der zylindrischen Mantelfläche 24 des Ausformrades 20 abwälzen kann. Die beiden Walzen 42 und 44 werden von einem gemeinsamen, regelbaren Motor 46, beispielsweise einem elektrischen Servomotor, derart angetrieben, daß die glatte Walze 42 sich gleichsinnig, und die geriffelte Walze 44 sich gegensinnig mit der Drehrichtung des Ausformrades 20 dreht, wobei die Umfangsgeschwindigkeit beider Walzen 42 und 44 vorzugsweise etwas geringer ist als die Umfangsgeschwindigkeit des Ausformrades 20. Beide Walzen 42 und 44 üben somit nach unten gerichtete Mitnahmekräfte auf die im Trichter 40 enthaltene Masse M aus, ohne diese in Umfangsrichtung des Ausformrades 20 nach außen zu transportieren.

Am Ständer 10 ist ferner ein Motor 48 zum Verstellen des Abstandes D der zentralen Achse 22 von der Ladestrecke 16 angeordnet.

Jede der Formen 32 - im dargestellten Beispiel sind im Ausformrad 20 insgesamt zwanzig solche Formen vorgesehen - enthält einen Kolben 50, der mit einem Stößel 52 verbunden oder mit ihm einstückig ausgeführt ist. Jeder der Kolben 50 ist innerhalb der ihn aufnehmenden zylindrischen Form 32 radial hinund herbewegbar und hat eine äußere Stirnfläche 54, die in gleicher Weise wie die zylindrische Mantelfläche 24 um die zentrale Achse 22 gekrümmt ist und in vollständig ausgefahrener Stellung des Kolbens 50 mit der Mantelfläche 24 des Ausformrades 20 eine einheitliche Zylinderfläche bildet. Diese Zylinderfläche ist nur dadurch unterbrochen, daß die Stirnfläche 54 jedes Kolbens 50 an ihrer in Drehrichtung des Ausformrades 20 vorderen Seite eine Anlaufschräge 56 aufweist.

Die Formen 32 könnten unmittelbar im Ausformrad 20 ausgebildet sein; im dargestellten Beispiel sind sie jedoch in je einer Buchse 58 angeordnet, die leicht auswechselbar in das Ausformrad 20 radial von außen eingesetzt und festgeschraubt ist.

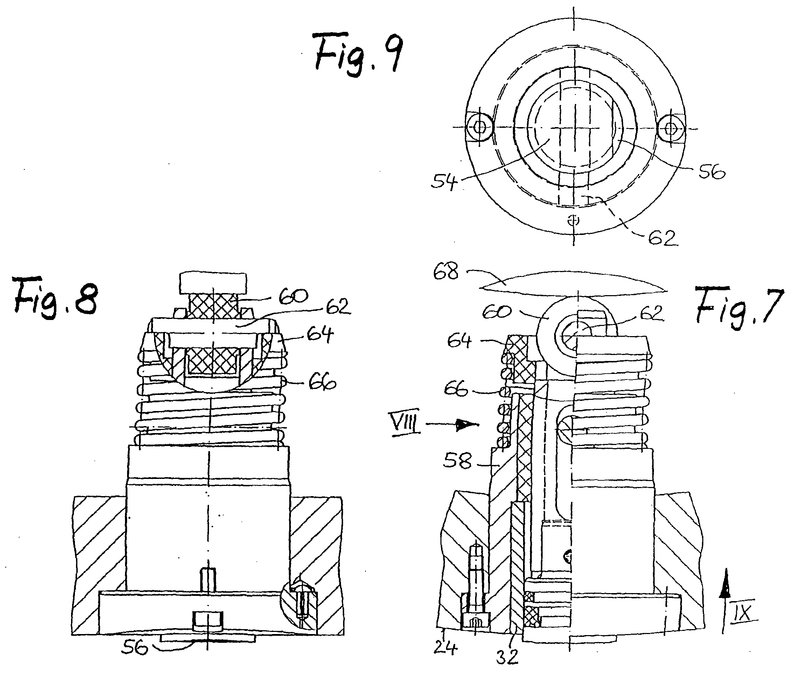

Jeder der Stößel 52 ist in seinem radial inneren Endbereich gabelförmig gestaltet und trägt dort ein Kurvenfolgeglied 60 in Form einer zylindrischen Rolle aus Kunststoff, die auf einem Achsbolzen 62 drehbar gelagert ist. Der Achsbolzen 62 ist durch das gabelförmige Ende des zugehörigen Stößels 52 hindurchgesteckt und weist gemäß Fig. 8 zwei abgeflachte Enden auf, an denen sich ein ringförmiger Federsitz 64 abstützt. Zwischen diesem und der zugehörigen Buchse 58 ist eine Feder 66, im dargestellten Beispiel eine schraubenförmige Druckfeder, mit Vorspannung derart gehalten, daß sie den zugehörigen Stößel 52 und somit auch Kolben 50 ständig mit einer radial nach innen, zur zentralen Achse 22 hin gerichteten Kraft belastet und dafür sorgt, daß das zugehörige Kurvenfolgeglied 60 auf einer zentralen Steuerkurve 68 abrollt.

Die Steuerkurve 68 ist innerhalb des Ausformrades 20 ortsfest angeordnet und derart gestaltet, daß jeder der Kolben 50 sich im Füllbereich 34 in seine innerste, der zentralen Achse 22 nächste Stellung zurückzieht und dabei Material M in die zugehörige Form 32 hineinsaugt. Im Absetzbereich 38 erreicht jeder Kolben 50 seine äußerste Stellung, in der seine äußere Stirnfläche 54 in der beschriebenen Weise mit der zylindrischen Mantelfläche 24 des Ausformrades 20 bündig ist.

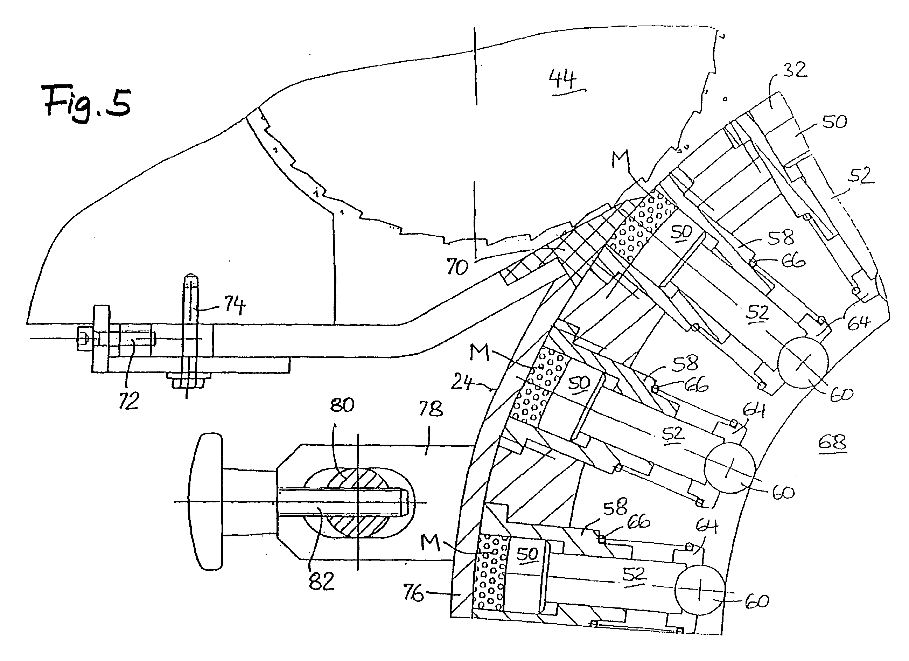

Das Ausformrad 20 bildet zusammen mit der geriffelten Walze 44 einen vom Trichter 40 abgewandten Zwickel, in dem ein Abweiser 70 angeordnet ist. Dieser ist mittels einer Stellschraube 72 (Fig. 5) in den genannten zwickel hinein oder aus ihm heraus verstellbar, je nachdem welche Stellung des Abweisers 70 bei gegebener zu verarbeitender Masse M die günstigste ist. Die gewählte Stellung des Abweisers 70 läßt sich mit einer Klemmschraube 74 fixieren.

An den Abweiser 70 kann sich ein Preßkörper 76 anschließen, der in Fig. 1 und 5 als teilzylindrischer Gleitschuh dargestellt ist, dessen dem Ausformrad 20 zugewandte Innenfläche konkav ist und den gleichen Krümmungsradius hat wie die zylindrische Mantelfläche 24. Von der Rückseite des Preßkörpers 76 erstrecken sich waagerecht zwei geschlitzte Laschen 78 weg, die auf je einer im Ständer 10 befestigten Querstange 80 mittels einer Stellschraube 82 waagerecht, zum Ausformrad 20 hin und von ihm weg, verstellbar abgestützt sind. In seiner abgebildeten Gebrauchsstellung überdeckt der Preßkörper 76 im Verweilbereich 36 mehrere, beispielsweise fünf oder sechs, Formen 32 und schließt sie radial nach außen dicht ab. Die im Füllbereich 34 unter dem Einfluß der Walzen 42 und 44 in die Formen 32 gelangte Masse M kann deshalb im Verweilbereich 36 dadurch verdichtet werden, daß die zentrale Steuerkurve 68 so gestaltet ist, daß sie die Kolben 50 im Verweilbereich 36 ein Stück weit nach außen drückt.

Unabhängig davon können die Formen 32 im Verweilbereich 36 gekühlt werden, beispielsweise mit flüssigem Stickstoff, damit in den Formen 32 hinreichend stabile Formlinge F entstehen, ehe diese in den Absetzbereich 38 gelangen.

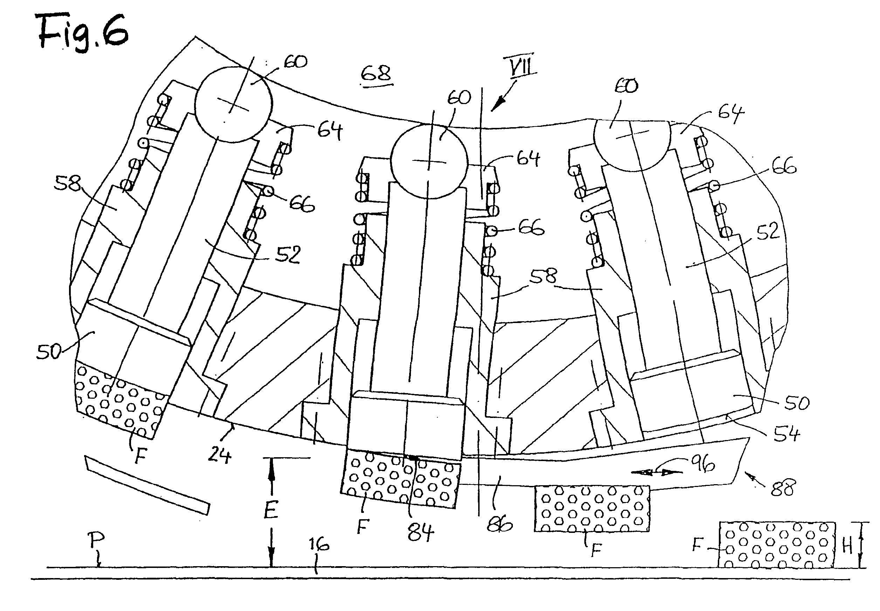

Im Absetzbereich 38 ist ein Abstreifer 84 angeordnet, der jeden einzelnen Formling F von dem bisher an ihm anliegenden Kolben 50 abstreift und so dafür sorgt, daß der Formling auf das Packmaterial P fällt, dessen geradlinige Bewegung über die Ladestrecke 16 hinweg in Größe und Richtung mit der Umfangsgeschwindigkeit 28 übereinstimmt, die der betreffende Formling F von seinem Transport im Ausformrad 20 mitbringt. Der Abstreifer 84 ist im dargestellten Beispiel ein Stahldraht, der sich entlang der untersten Mantellinie der zylindrischen Mantelfläche 24 des Ausformrades 20 erstreckt und von einem gabelförmigen Arm 86 eines zweiarmigen Hebels 88 getragen ist. Der Hebel 88 ist um eine Schwenkachse 90 schwenkbar, die sich parallel zur zentralen Achse 22 erstreckt, und ist an seinem dem Abstreifer 84 entgegengesetzten Arm 92 mit einer einstellbaren, nach unten gerichteten Kraft 94 belastet, die eine Federkraft sein kann. Die Schwenkachse 90, und somit der gesamte zweiarmige Hebel 88 mit dem Abstreifer 84, ist in tangentialer Richtung der zylindrischen Mantelfläche 24 gemäß dem Pfeil 96 in Fig. 6 verstellbar, so daß der günstigste Standort des Abstreifers 84 entsprechend der Art der zu verarbeitenden Masse M wählbar ist.

Die Einrichtung 18 zum Umschließen der Formlinge F umfaßt im wesentlichen eine Biegestrecke 100, auf der das streifenförmige Packmaterial P im Bereich seiner einander gegenüberliegenden Ränder R aufgebogen wird. Daran anschließend ist ein Längssiegelgerät 102 mit einer Mehrzahl paarweise angeordneter Walzen vorgesehen, zwischen denen die Ränder R hindurchlaufen, und von denen sie vorwärtsgezogen und miteinander verbunden, beispielsweise verschweißt werden. Die Walzen des Längssiegelgerätes 102 werden von dem schon erwähnten Antrieb 30 angetrieben, der mit dem Antrieb 26 des Ausformrades 20 synchronisierbar ist.

An das Längssiegelgerät 102 schließt sich ein Quersiegelgerät 104 an, das im wesentlichen von einem Paar Walzen mit in Winkelabständen angeordneten Schweißbacken 106 und einem die Walzen drehenden Antrieb 108 gebildet ist, welcher ebenfalls mit den vorgenannten Antrieben 26 und 30 synchronisiert ist. Das Quersiegelgerät 104 ist zum Bilden von Quernähten zwischen aufeinanderfolgenden Formlingen (F) im bis dahin noch ununterbrochenen streifenförmigen Packmaterial (P) ausgebildet und ferner auch zum Durchtrennen des Packmaterials zwischen den Formlingen.

## Patentansprüche

1. Maschine zum Herstellen und Verpacken von Formlingen (F) aus formbarer Masse (M), mit
- einer Ladestrecke (16), auf der streifenförmiges Packmaterial (P), mindestens annähernd waagerecht liegend, längs bewegbar ist,
- einem Ausformrad (20), das um eine zentrale Achse (22) drehantreibbar ist und eine zylindrische Mantelfläche (24) sowie mehrere Formen (32) aufweist, die in Winkelabständen rings um diese zentrale Achse (22) angeordnet sind, wobei
- die zentrale Achse (22) in einem Abstand (D) über der Ladestrecke (16) querliegend angeordnet ist und
- die Formen (32) ausgehend von der zylindrischen Mantelfläche (24) des Ausformrades (20) in bezug auf dessen zentrale Achse (22) radial angeordnet sind, ferner mit
- einem Füllbereich (34), durch den hindurch die Formen (32) nacheinander bewegbar sind, um mit Masse (M) gefüllt zu werden,
- einem Verweilbereich (36), nach dessen Durchlaufen die Masse (M) in der sie aufnehmenden Form (32) ein verpackbarer Formling (F) ist,
- einem Absetzbereich (38), der über der Ladestrecke (16) so angeordnet ist, dass jeder Formling (F) aus seiner Form (32) unmittelbar auf dem Packmaterial (P) absetzbar ist, wobei
- das Ausformrad (20) mit einer Umfangsgeschwindigkeit (28) antreibbar ist, die derjenigen einer schlupffreien Abwälzung auf dem sich längsbewegenden streifenförmigen Packmaterial (P) annähernd entspricht, und schließlich mit
- einer Einrichtung (18) zum Umschließen der auf dem Packmaterial (P) liegenden Formlinge (F), mit einer Biegestrecke (100) zum Aufbiegen der einander gegenüberliegenden seitlichen Ränder (R) des streifenförmigen Packmaterials (P),
**dadurch gekennzeichnet, dass**
- jede Form (32) einen eigenen Kolben (50) enthält, der hin- und herbewegbar ist zwischen einer zurückgezogenen Stellung zum Füllen der Form (32) mit Masse (M) und einer vorgeschobenen Stellung zum radial nach außen gerichteten Auswerfen des verfestigten Formlings (F) auf das Packmaterial (P),
- der Abstand (D) zwischen der zentralen Achse (22) des Ausformrades (20) und der Ladestrecke (16) zur Anpassung an Formlinge (F) unterschiedlicher Höhe (H) einstellbar ist, und
- die Einrichtung (18) zum Umschließen der auf dem streifenförmigen Packmaterial (P) liegenden Formlinge (F) ferner gebildet ist von:
- - einem Längssiegelgerät (102) zum gegenseitigen Verbinden der beiden Ränder (R) des streifenförmigen Packmaterials (P), das somit eine Schlauchform annimmt, und
- - einem Quersiegelgerät (104) zum Bilden von Quernähten im streifenförmigen Packmaterial (P) zwischen aufeinanderfolgenden Formlingen (F), und dass
- dem Ausformrad (20), dem Längssiegelgerät (104) und dem Quersiegelgerät (104) miteinander synchronisierbare Antriebe (26, 30, 108) für das Herstellen und Absetzen der Formlinge (F) und für die Bewegung sowie das Versiegeln des Packmaterials (P) zugeordnet sind.

2. Maschine nach Anspruch 1,
**dadurch gekennzeichnet, dass** die Formen (32) innerhalb je einer Buchse (58) angeordnet sind, die im Ausformrad (20) so befestigt ist, dass sie zusammen mit dem zugehörigen Kolben (50) auswechselbar ist.

3. Maschine nach Anspruch 1 oder 2,
**dadurch gekennzeichnet, dass** die Kolben (50) über je ein mit ihnen verbundenes Kurvenfolgeglied (60) von einer zentralen Steuerkurve (68) gesteuert sind.

4. Maschine nach einem der Ansprüche 1 bis 3,
**dadurch gekennzeichnet, dass** die Formen (32) entlang mindestens eines Teils des Verweilbereichs (36) mittels eines Presskörpers (76) verschließbar sind, der an die zylindrische Mantelfläche (24) des Ausformrades (20) anpreßbar ist.

5. Maschine nach einem der Ansprüche 1 bis 4,
**dadurch gekennzeichnet, dass** im Absetzbereich (38) als Abstreifer (84) zum Trennen der Formlinge (F) von den Kolben (50) ein Stahldraht angeordnet ist, der sich längs einer Mantellinie des Ausformrades (20) erstreckt.

6. Maschine nach Anspruch 5,
**dadurch gekennzeichnet, dass** die Kolben (50) eine entsprechend der zylindrischen Mantelfläche (24) des Ausformrades (20) gekrümmte Stirnfläche (54) mit einer in Drehrichtung des Ausformrades (20) vorwärtsweisenden Anlaufschräge (56) für den Abstreifer (84) aufweisen.

7. Maschine nach einem der Ansprüche 1 bis 6,
**dadurch gekennzeichnet, dass** das Quersiegelgerät (104) auch zum Durchtrennen des streifenförmigen Packmaterials (P) zwischen aufeinanderfolgenden Formlingen (F) ausgebildet ist.

## Claims

1. Machine for manufacturing and packaging formed bodies (F) of a mouldable substance (M), comprising
- a loading section (16), on which strip-shaped packaging material (P) arranged at least approximately horizontally is longitudinally movable,
- a shaping wheel (20) which is adapted to be driven to rotate about a central axis (22) and has a cylindrical peripheral surface (24) as well as a plurality of moulds (32) disposed at angular intervals around said central axis (22), wherein
- the central axis (22) is disposed transversely at a distance (D) above the loading section (16) and
- the moulds (32) are disposed, starting from the cylindrical peripheral surface (24) of the shaping wheel (20), radially in relation to the latter's central axis (22), and further comprising
- a filling area (34) through which the moulds (32) are movable in succession in order to be filled with substance (M),
- a dwell area (36), after travelling through which the substance (M) contained in the mould (32) is a packageable formed body (F),
- a deposit area (38) which is disposed above the loading section (16) in such a way that each formed body (F) may be deposited from its mould (32) directly on the packaging material (P), with
- the shaping wheel (20) being drivable at a peripheral speed (28) which approximately corresponds to that of a slip-free rolling on the longitudinally moving strip-shaped packaging material (P), and finally comprising
- a device (18) for wrapping the formed bodies (F) lying on the packaging material (P) with a bending section (10) for upward bending of the mutually opposite side edges ( R) of the strip-shaped packaging material (P),
**characterized in that**
- each mould (32) contains a separate piston (50) which is movable back and forth between a retracted position for filling the mould (32) with substance (M) and an advanced position for ejecting the consolidated formed body (F) in a radially outward direction onto the packaging material (P),
- the distance (D) between the central axis (22) of the shaping wheel (20) and the loading section (16) is adjustable for adaptation to formed bodies (F) of differing height (H) and
- the device (18) for wrapping the formed bodies (F) lying on the strip-shaped packaging material (P) is further composed of:
-- a longitudinal sealing unit (102) for joining together the two edges (R) of the strip-shaped packaging material (P), which therefore assumes a tubular shape, and
-- a transverse sealing unit (104) for forming transverse seams in the strip-shaped packaging material (P) between successive formed bodies (F), and **in that**
- associated with the shaping wheel (20), the longitudinal sealing unit (102) and the transverse sealing unit (104) are drives (26, 30, 108), which may be synchronized with one another, for manufacturing and depositing the formed bodies (F) and for moving and sealing the packaging material (P).

2. Machine according to claim 1,
**characterized in that** the moulds (32) are each disposed inside a bush (58) which is fastened in the shaping wheel (20) in such a way as to be exchangeable together with the associated piston (50).

3. Machine according to claim 1 or 2,
**characterized in that** the pistons (50) are controlled, via a cam follower (60) each connected thereto, by a central control cam (68).

4. Machine according to one of claims 1 to 3,
**characterized in that** the moulds (32) along at least one part of the consolidating area (36) are sealable by means of a pressing body (76), which is pressable against the cylindrical peripheral surface (24) of the shaping wheel (20).

5. Machine according to one of claims 1 to 4,
**characterized in that** a steel wire, which extends along a surface line of the shaping wheel (20) is arranged as scraper (84) for separating the formed bodies (F) from the pistons (50), is disposed in the deposit area (38).

6. Machine according to claim 5,
**characterized in that** the pistons (50) have an end face (54) curved in accordance with the cylindrical peripheral surface (24) of the shaping wheel (20) and having a run-on bevel (56), which is directed forward in the direction of rotation of the shaping wheel (20), for the scraper (84).

7. Machine according to one of claims 1 to 6,
**characterized in that** the transverse sealing unit (104) is designed also to cut the strip-shaped packaging material (P) between successive formed bodies (F).

## Revendications

1. Machine pour produire et emballer des pièces moulées (F) à partir d'une matière à mouler (M), comprenant
- une voie de chargement (16) sur laquelle un matériau d'emballage en forme de bande (P), étalé de façon au moins approximativement horizontale, peut être déplacé de façon longitudinale,
- une roue de démoulage (20) qui peut être entraînée en rotation autour d'un axe central (22) et présente une surface latérale cylindrique (24) ainsi que plusieurs moules (32) qui sont disposés à des écarts angulaires autour de cet axe central (22), dans laquelle
- l'axe central (22) est disposé de façon transversale à une distance (D) au-dessus de la voie de chargement (16), et
- les moules (32) sont disposées radialement à partir de la surface latérale cylindrique (24) de la roue de démoulage (20) par rapport à cet axe central (22), comprenant en outre
- une zone de remplissage (34) à travers laquelle les moules (32) peuvent être déplacés successivement pour être remplis avec la matière (M),
- une zone de séjour (36) après le passage de laquelle la matière (M) dans le moule (32) qui la reçoit est une pièce moulée (F) prête à emballer,
- une zone de dépose (38) qui est disposée au-dessus de la voie de chargement (16) de telle sorte que chaque pièce à mouler (F) peut être déposée à partir de son moule (32) directement sur le matériau d'emballage (P), dans laquelle
- la roue de démoulage (20) peut être entraînée à une vitesse circonférentielle (28) qui correspond approximativement à celle d'un déroulement sans glissement sur le matériau d'emballage en forme de bande (P) se déplaçant de façon longitudinale, et comprenant enfin
- un dispositif (18) pour entourer les pièces moulées (F) posées sur le matériau d'emballage (P), avec une section de pliage (100) pour déplier les bords latéraux opposés (R) du matériau d'emballage en forme de bande (P),
**caractérisée en ce que**
- chaque moule (32) contient son propre piston (50) qui peut alterner entre une position rentrée pour remplir le moule (32) avec la matière (M) et une position avancée pour éjecter radialement vers l'extérieur la pièce moulée solidifiée (F) sur le matériau d'emballage (P),
- la distance (D) entre l'axe central (22) de la roue de démoulage (20) et la voie de chargement (16) est réglable pour s'adapter à des pièces moulées (F) de hauteur variable (H), et
- le dispositif (18) pour entourer les pièces moulées (F) posées sur le matériau d'emballage en forme de bande (P) est en outre composé :
- d'un appareil de scellage longitudinal (102) pour raccorder l'un à l'autre les deux bords (R) du matériau d'emballage en forme de bande (P) qui adopte ainsi une forme de tuyau souple, et
- d'un appareil de scellage transversal (104) pour former des soudures transversales dans le matériau d'emballage en forme de bande (P) entre des pièces moulées (F) successives, et **en ce que**
- des entraînements (26, 30, 108) pouvant être synchronisés les uns avec les autres, pour la production et la dépose des pièces moulées (F) et pour le déplacement ainsi que le scellage du matériau d'emballage (P), sont affectés à la roue de démoulage (20), à l'appareil de scellage longitudinal (102) et à l'appareil de scellage transversal (104).

2. Machine selon la revendication 1, **caractérisée en ce que** les moules (32) sont disposés à l'intérieur d'une douille (58) respectivement qui est fixée dans la roue de démoulage (20) de telle sorte qu'elle peut être remplacée en même temps que le piston (50) associé.

3. Machine selon la revendication 1 ou 2, **caractérisée en ce que** les pistons (50) sont commandés par une came de commande centrale (68) respectivement par l'intermédiaire d'un élément suiveur de came (60) relié à ceux-ci.

4. Machine selon l'une quelconque des revendications 1 à 3, **caractérisée en ce que** les moules (32) peuvent être fermés au moins le long d'une partie de la zone de séjour (36) au moyen d'un corps de pression (76) qui peut être pressé contre la surface latérale cylindrique (24) de la roue de démoulage (20).

5. Machine selon l'une quelconque des revendications 1 à 4, **caractérisée en ce que** dans la zone de dépose (38), comme démouleur (84) pour séparer les pièces moulées (F) des pistons (50), un fil d'acier est disposé qui s'étend le long d'une génératrice de la roue de démoulage (20).

6. Machine selon la revendication 5, **caractérisée en ce que** les pistons (50) présentent une face frontale (54) incurvée selon la surface latérale cylindrique (24) de la roue de démoulage (20), la face présentant dans le sens de rotation de la roue de démoulage (20) une inclinaison de démarrage (56) orientée vers l'avant pour le démouleur (84).

7. Machine selon l'une quelconque des revendications 1 à 6, **caractérisée en ce que** l'appareil de scellage transversal (104) est également réalisé pour sectionner le matériau d'emballage en forme de bande (P) entre des pièces moulées (F) successives.
